# EUROPEAN PATENT APPLICATION

(11) **EP 3 808 785 A1**
(43) Date of publication of application: **21.04.2021**
(21) Application number: 19820540.3
(22) Date of filing: 14.06.2019
(51) Int. Cl.: C08F 20/26, C08F 20/10, C09J 4/02, C09J 11/06

(54) **COMPOSITION**

(30) Priority: 15.06.2018 JP 2018114119
(71) Applicant: Denka Company Limited, Tokyo 103-8338 (JP)
(72) Inventor: HOSHINO,Takako, Machida-city, Tokyo 1948560 (JP); GOTO,Yoshitsugu, Machida-city, Tokyo 1948560 (JP)
(74) Representative: Gulde & Partner
(86) International application number: PCT/JP2019/023734
(87) International publication number: WO 2019/240277

(57) **Abstract**

An object of the present invention is to provide a two-part composition containing a first agent and a second agent: the first agent comprising (1) (meth)acrylate and (2) organoboron compound, and having an oxygen content of 5 ppm or less, and the second agent comprising (3) phosphate ester.

## Description

### TECHNICAL FIELD

The present invention relates to a composition having, for example, good storage stability.

### BACKGROUND ART

Polyolefins represented by polyethylene and polypropylene are used in a wide range of fields, such as materials for automobile parts, electric parts, building materials, food packaging films. Polyolefin is a non-polar material, that is a hardly adhesive material.

A two-component acrylic adhesive is used as a structural adhesive in a wide range of fields, which has such properties, curing at room temperature in a short time, having small affection of mixing ratio deviation, and having a good balance between adhesion and peeling.

However, the above two-component acrylic adhesive also has low adhesiveness to the polyolefin, as same as other adhesives, and is not suitable to application for the adhesion of the polyolefin.

For adhesion, these hardly adhesive materials are often to required to surface treatments such as flame treatment, itro treatment, corona discharge, plasma treatment, oxidation with ozone or acid, and sputter etching. And, for adhesion, the surface of such hardly adhesive materials may be coated with a primer, but the above surface treatment is often required for such primer coating, and even if these treatments are performed, sufficient adhesiveness might not be obtained.

Patent Documents 1 to 5 describe compositions containing an organoboron compound and a (meth)acrylate. However, Patent Documents 1 to 5 do not describe the oxygen content.

### CITATION LIST

### Patent Literature

Patent Document 1: Japanese Patent Application Laid-open Publication No. H09-003109A
Patent Document 2: Japanese Patent Application Laid-open Publication No. 2007-515547A
Patent Document 3: Japanese Patent Application Laid-open Publication No. 2016-047901A
Patent Document 4: Japanese Patent Application Laid-open Publication No. 2000-504353A
Patent Document 5: Japanese Patent Application Laid-open Publication No. 2012-530601A

### SUMMARY OF INVENTION

### Solution to Problem

The present invention has been made in view of the above problems, and an object of the present invention is to provide a composition having good storage stability.

### Means for Solving the Problems

The present invention may provide the below embodiments.
<1> A two-part composition containing a first agent and a second agent:
   the first agent comprising (1) (meth)acrylate and (2) organoboron compound, and having an oxygen content of 5 ppm or less, and
   the second agent comprising (3) phosphate ester.
<2> The composition according to <1>, wherein (3) phosphate ester is a phosphate ester represented by the general formula (A):
   general formula (A) 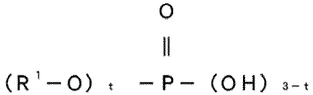 (In the formula, R¹ is a saturated or unsaturated hydrocarbon group having 1 to 30 carbon atom(s), or CH₂=CR²C(O)O-(R³)ᵤ-group) where R² represents a hydrogen or methyl group, R³ represents -C₂H₄-, -C₃H₆-, -CH₂CH(CH₃)-, -C₄H₈-, -C₆H₁₂-, or 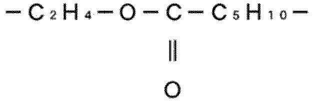 t represents an integer of 1 or 2. u represents an integer of 1 to 10.)
<3> The composition according to <1> or <2>, wherein (3) phosphate ester is used in 0.5 to 20 parts by mass with respect to 100 parts by mass of (1) (meth)acrylate.
<4> The composition according to any one of <1> to <3>, wherein (1) (meth)acrylate contains (1-1) (meth)acrylate having a cyclic ether skeleton.
<5> The composition according to any one of <1> to <4>, wherein (1) (meth)acrylate contains (1-1) (meth)acrylate having a cyclic ether skeleton and (1-2) (meth)acrylate having an aliphatic hydrocarbon group.
<6> The composition according to any one of <1> to <5>, wherein (2) organoboron compound is an alkylborane-amine complex.
<7> The composition according to <6>, wherein the alkylborane-amine complex is one or more of the groups consisting of triethylborane-1,3-diaminopropane complex, triethylborane-diethylenetriamine complex, and tributylborane-3-methoxy-1-propylamine complex.
<8> The composition according to any one of <1> to <7>, wherein (2) organoboron compound is used in 0.01 to 10 parts by mass with respect to 100 parts by mass of (1) (meth)acrylate.
<9> The composition according to any one of <1> to <8>, wherein at least one of the first agent and the second agent further contains (4) elastomer component.
<10> A curable resin composition containing the composition according to any one of <1> to <9>.
<11> An adhesive composition containing the composition according to any one of <1> to <9>.
<12> The adhesive composition according to <11>, which being used for adhering an adhered body comprising one or more of the group consisting of polyolefin, cycloolefin, polystyrene, and fiber reinforced plastic.
<13> A bonded body bonded by the adhesive composition according to <11> or <12>.

### Advantageous Effects of Invention

The present invention can provide a composition having good storage stability.

### DESCRIPTION of EMBODIMENTS

In an embodiment of the present invention, (1) (meth)acrylate is a compound having a (meth)acryloyl group. The (meth)acrylate may preferably be a monomer. The term (meth)acryloyl group means an "acryloyl group" or a "methacryloyl group". The term (meth)acrylate means "acrylate" or "methacrylate". Since the composition of the embodiment is used separately for a first agent and a second agent, the "usage content" of each component means the total content of the components in the first agent and the second agent. Unless otherwise specified, the numerical range in this specification shall include the upper limit value and the lower limit value.

In an embodiment, (1) (meth)acrylate may preferably contain (1-1) (meth)acrylate having a cyclic ether skeleton. The (1) (meth)acrylate used in the embodiment may contain one or more groups consisting of (1-1) (meth)acrylate having a cyclic ether skeleton and (1-2) (meth)acrylate having an aliphatic hydrocarbon group, and may more preferably contain (1-1) (meth)acrylate having a cyclic ether skeleton and (1-2) (meth)acrylate having an aliphatic hydrocarbon group. The (1) (meth)acrylate may preferably be a monofunctional (meth)acrylate having one (meth) acryloyl group.

### (1-1) (meth)acrylate having a cyclic ether skeleton

The (meth)acrylate having a cyclic ether skeleton may include glycidyl (meth)acrylate, flufuryl (meth)acrylate, tetrahydrofurfuryl (meth)acrylate, 3-ethyl-3-oxetanylmethyl (meth)acrylate, and (2-methyl-ethyl-1,3-dioxolan-4-yl) methyl (meth)acrylate, cyclic trimethylolpropane formal (meth)acrylate, γ-butyrolactone (meth)acrylate, dioxolan (meth)acrylate, dioxane glycol di(meth)acrylate, and oxetane (meth)acrylate. One or more of these can be used. For the cyclic ether skeleton, a 5- to 6-membered ring may be preferable. The cyclic ether skeleton may preferably have one oxygen atom. The cyclic ether skeleton may preferably have 2 to 5 carbon atoms. For the (meth)acrylates having the cyclic ether skeleton, tetrahydrofurfuryl (meth)acrylate may be preferably used.

### (1-2) (meth)acrylate having an aliphatic hydrocarbon group

For the alkyl (meth)acrylate, the (meth)acrylate represented by the general formula (B) may be preferably used.

General formula (B): Z-O-R¹¹

(In the formula, Z represents a (meth)acryloyl group and R¹¹ represents an aliphatic hydrocarbon group.)

The aliphatic hydrocarbon group may preferably have 1 to 20 carbon atoms, and more preferably 4 to 12 carbon atoms. As the aliphatic hydrocarbon group, a saturated aliphatic hydrocarbon group may be preferably used.

The (meth)acrylate may preferably be a (meth)acrylate in which R¹¹ is an alicyclic hydrocarbon group (hereinafter, referred to as an alicyclic (meth)acrylate). For the alicyclic (meth)acrylates, saturated alicyclic (meth)acrylates may be preferably used. The saturated alicyclic (meth)acrylate may include dicyclopentanyl (meth)acrylate, isobornyl (meth)acrylate, and adamantyl (meth) acrylate. Among these, isobornyl (meth)acrylate may preferably be used.

(1-2) The (meth)acrylate having an aliphatic hydrocarbon group may include (meth)acrylate having a chain aliphatic hydrocarbon group. For the (meth)acrylate having a chain aliphatic hydrocarbon group, isooctyl (meth)acrylate may be preferably used.

The content ratio of (1) (meth)acrylate containing (1-1) the (meth)acrylate having a cyclic ether skeleton and (1-2) (meth)acrylate having an aliphatic hydrocarbon group may preferably be as the below, (1-1) : (1-2) = 20 to 90:10 to 80 may be preferable, 40 to 70:30 to 60 may be more preferable, and 50 to 60:40 to 50 may be the most preferable with respect to 100 parts by mass of the (meta)acrylate.

(2) organoboron compound used in the embodiment may preferably be an organic complex having a boron atom. (2) organoboron compound acts as a polymerization initiator of (meth)acrylate. For the organoborane compounds, an alkylborane complex may be preferably used. For the alkylborane complexes, an alkylborane-amine complex may be preferably used. The alkylborane-amine complex is a complex obtained by coordinating an amine with alkylborane. The alkylborane-amine complex may include triethylborane-diaminopropane complex such as triethylborane-1,3-diaminopropane complex, triethylborane-diethylenetriamine complex, tributylborane-3-methoxy-1-propylamine complex, and tributylborane-1,3-diaminopropane complex, triisobutylborane-1,3-diaminopropane complex. One or more of these can be used. Among these, one or more of the groups consisting of triethylborane-diaminopropane complex and triethylborane-diethylenetriamine complex may be preferably used and triethylborane-diethylenetriamine complex may be more preferably used.

The boron compound in the embodiment may be preferably used in 0.01 to 10 parts by mass, more preferably 0.1 to 5 parts by mass, and most preferably 0.2 to 4 parts by mass with respect to 100 parts by mass of (1) (meth)acrylate. If it is 0.01 part by mass or more, the adhesiveness can be improved, and if it is 10 parts by mass or less, the curing reaction may not become too fast and the workability can be maintained. The first agent contained in the composition according to the present embodiment contains the above-mentioned (1) and (2) components.

The second agent contained in the composition according to the embodiment contains (3) phosphate ester. The (3) phosphate ester acts as a curing accelerator for (meth)acrylate. For the (3) phosphate ester used in the embodiment, the compound represented by the general formula (A) may be preferably used. 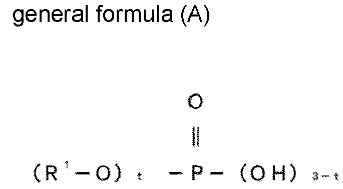 (In the formula, R¹ is a saturated or unsaturated hydrocarbon group having 1 to 30 carbon atom(s), or CH₂=CR²C(O)O-(R³)ᵤ-group) where R² represents a hydrogen or methyl group, R³ represents -C₂H₄-, -C₃H₆-, -CH₂CH(CH₃)-, -C₄H₈-, -C₆H₁₂-, or 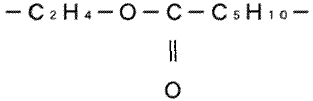 t represents an integer of 1 or 2. u represents an integer of 1 to 10.)

R¹ may preferably be one or more of a saturated or unsaturated hydrocarbon group having 1 to 20 carbon atoms and CH₂=CR²C(O)O-(R³)-group, and CH₂=CR²C(O)O-(R³)ᵤ-group may be more preferable, from the viewpoint of higher reactivity with the (2) component.

When R¹ is a saturated or unsaturated hydrocarbons group having 1 to 20 carbon atoms, the (3) phosphate ester may preferably be 2-ethylhexyl acid phosphate. When R¹ is CH₂=CR²C(O)O-(R³)ᵤ- group, (3) phosphate ester may preferably be acid phosphooxyethyl (meth)acrylate.

The phosphate ester may include ethyl acid phosphate, butyl acid phosphate, dibutyl pyrophosphate, butoxyethyl acid phosphate, 2-ethylhexyl acid phosphate, alkyl (C12, C14, C16, C18) acid phosphate, isotridecyl acid phosphate, oleyl acid phosphate, tetracosyl acid phosphate, dibutyl phosphate, bis (2-ethylhexyl) phosphate, acid phosphooxyethyl (meth)acrylate, acid phosphooxypropyl (meth)acrylate, bis (2-(meth)acryloyloxyethyl) phosphate, and butyl glycol ether acid phosphate. One or more of these can be used. Among these, at least one of the groups consisting of 2-ethylhexyl acid phosphate and acid phosphooxyethyl (meth)acrylate may be preferably used, and acid phosphooxyethyl (meth)acrylate more preferably used from the viewpoint of high reactivity with the (2) component.

The phosphate ester used in the embodiment may be preferably used in 0.5 to 20 parts by mass, more preferably 1 to 10 parts by mass, and most preferably 1.5 to 8 parts by mass with respect to 100 parts by mass of (1) (meth)acrylate. If it is 0.5 parts by mass or more, adhesiveness can be exhibited, and if it is 20 parts by mass or less, the curing reaction may not become too fast and the workability can be maintained.

The (4) elastomer component may be preferably used in the composition of the embodiment for improvement of the adhesiveness. At least one of the first agent and the second agent contained in the composition may contain the (4) component. (4) elastomer component refers to a polymer substance having rubber-like elasticity at room temperature, and preferably be one that can be dissolved or dispersed in (meth)acrylate.

The (4) elastomer components may include (meth)acrylonitrile-butadiene-(meth)acrylic acid copolymer, (meth) acrylonitrile-butadiene-methyl (meth)acrylate copolymer, methyl (meth)acrylate-butadiene-styrene copolymer, (meth)acrylonitrile-styrene-butadiene copolymers, (meth)acrylonitrile-butadiene rubbers, various synthetic rubbers such as, linear polyurethanes, styrene-butadiene rubbers, chloroprene rubbers and butadiene rubbers, natural rubbers, styrene-polystyrene-based thermoplastic elastomers such as styrene-polybutadiene-styrene synthetic rubber, olefin-based thermoplastic elastomers such as polyethylene-EPDM synthetic rubber, urethane-based thermoplastic elastomers such as caprolactone type, adipate type and PTMG type, polyester-based thermoplastic elastomers such as polybutylene terephthalate-polytetramethylene glycol multi-block polymers, polyamide-based thermoplastic elastomers such as nylon-polypoly block copolymers and nylon-polyester block copolymers, 1,2-polybutadiene-based thermoplastic elastomers, vinyl chloride-based thermoplastic elastomers. One or more of these elastomer components may be used as long as they have good compatibility. Among these, at least one of the groups consisting of (meth)acrylonitrile-butadiene rubber and butadiene rubber may be preferably used, and (meth)acrylonitrile-butadiene rubber may be more preferably use from the viewpoint of solubility and adhesiveness to (meth)acrylate.

The (4) elastomer component may be preferably used in 0.1 to 40 parts by mass, more preferably 1 to 15 parts by mass, most preferably 2 to 8 parts by mass with respect to 100 parts by mass of (1) (meth)acrylate from the viewpoint of adhesiveness.

For the composition in the embodiment, already known substances such as paraffins, various antioxidants including polymerization inhibitors, coupling agents, plasticizers, fillers, colorants and preservatives can be used.

A two-part composition are used in the embodiment. That is, all the essential components for the composition of the embodiment are not mixed during storage, the composition shall be divided into a first agent and a second agent, the first agent contains at least the (2) component, and the second agent contains at least (3) the component separately. Both agents may be applied to the adherend body at the same time or separately to contact and cure, at the time of use. The (4) elastomer component may be contained in both or one of the first agent and the second agent.

The composition of the embodiment does not require accurate weighing of the two agents and can cure at room temperature even with incomplete weighing, mixing, or sometimes contacting between the two agents. Ultraviolet light is not also required for curing the composition of the embodiment. The composition of the embodiment has good workability.

The first agent contained in the composition of the embodiment may have an oxygen content of 5 ppm or less. The oxygen content may preferably be 1 ppm or less, more preferably 0.1 ppm or less. The oxygen content refers to, for example, the amount of the oxygen dissolved in the composition. If the dissolved oxygen content in the first agent is 5 ppm or less, storage stability will be improved.

Methods for adjusting and reducing the dissolved oxygen content may include stirring the composition under reduced pressure to remove the dissolved oxygen, spraying or dropping the composition in a nitrogen gas atmosphere to reduce the dissolved oxygen with gas exchange, blowing nitrogen gas into the composition to reduce the dissolved oxygen, and contacting a liquid in which oxygen is dissolved with an oxygen permeable membrane to continuously reduce the dissolved oxygen.

The composition of the embodiment may be used as a curable resin composition. The composition of the embodiment may be used as an adhesive composition.

The adhesive composition of the embodiment may be preferably used for an adhered body. The adhered body may preferably be one or more of the groups consisting of polyolefins such as polypropylene and polyethylene, cycloolefins, polystyrenes, and fiber reinforced plastics. The fiber reinforced plastic is, for example, a plastic containing fibers. The fiber may preferably be carbon fiber. The plastic may preferably be polyolefin. The adhesive composition of the embodiment can exhibit good adhesiveness to a hardly adhesive body such as polyolefin, and a hardly adhesive body such as polyolefin containing fibers.

### EXAMPLES

Hereinafter, the embodiment of the present invention will be explained in detail by the following experiment examples, but the embodiment is not limited to these examples. The content of each substance is shown in "parts by mass". Each substance is show by the following abbreviations. Unless otherwise specified, the tests were performed in a temperature of 23 °C and a humidity of 50% in an RH environment.

### Examples 1 to 8

Each material used was mixed according to the composition shown in Table 1 to prepare an adhesive composition containing a first agent and a second agent. Each material used was mixed in a nitrogen gas atmosphere to adjust the oxygen content. Nitrogen gas was blown into each material to be used to adjust the dissolved oxygen before mixing, if needed. The results are shown in Table 1.

### Materials Used

Tetrahydrofurfuryl methacrylate: commercially available
Isooctyl acrylate: commercially available
Isobornyl methacrylate: commercially available
Alkylborane-amine complex: trade name "TEB-DETA" (manufactured by BASF, triethylborane-diethylenetriamine complex)
Phosphate ester: commercially available, acid phosphooxyethyl methacrylate, in the general formula (A), t = 1, R² is CH₂=C(CH₃)COO-C₂H₄-
PP: Polypropylene test piece, commercially available

CFR-PP: Polypropylene test piece containing carbon fiber, commercially available
NBR: Acrylonitrile-butadiene rubber, commercially available
Polybutadiene: commercially available

Each physical property was measured as follows.

### Tensile Shear Strength (Tensile Lap-Shear Strength, Adhered body: PP)

An adhesive in which a first agent and a second agent were blended was applied to one side of one single test piece (25 mm × 25 mm × 0.7 mmt, PP), thereafter, immediately laminated to the other test piece (25 mm × 25 mm × 2 mmt, PP), and cured at room temperature for 24 hours to prepare a specimen, according to JIS K-6856. The tensile lap-shear strength (unit: MPa) of the specimen was measured under the RH conditions of a temperature of 23 °C and a humidity of 50% with a pulling rate of 10 mm/min. For the fracture state of the adhered composite materials, the fracture at the interface between the adhered body and the adhesive is referred to as "interfacial fracture", the fracture inside the adhesive layer is referred to as "aggregate fracture", and the fracture or break or breakdown point of the adhered body is referred to as "material fracture". For PP, the breakdown point was shown at 4 MPa, and the state in which the adhered body was stretched was defined as "material fracture". "Material fracture" may preferably be from the viewpoint of higher adhesiveness between the specimen and the adhesive.

### Tensile Shear Strength (Tensile Lap-Shear Strength, Adhered body: CFR-PP)

An adhesive in which a first agent and a second agent were blended was applied to one side of one single test piece (25 mm × 25 mm × 0.7 mmt, PP), thereafter, immediately laminated to the other test piece (25 mm × 25 mm × 2 mmt, CFR-PP), and cured at room temperature for 24 hours to prepare a specimen, according to JIS K-6856. The tensile lap-shear strength (unit: MPa) of the specimen was measured under the RH conditions of a temperature of 23 °C and a humidity of 50% with a pulling rate of 10 mm/min. For the fracture state of the adhered composite materials, the fracture at the interface between the adhered body and the adhesive is referred to as "interfacial fracture", the fracture inside the adhesive layer is referred to as "aggregate fracture", and the fracture or break or breakdown point of the adhered body is referred to as "material fracture". The "material fracture" may preferably be from the viewpoint of higher adhesiveness between the specimen and the adhesive.

### Viscosity (stability viscosity)

The first agent was used as a specimen. A parallel plate PP25 (plate diameter: 25 mm) was examined with a rheometer, the two-minute value (i.e., value two minutes after rotation) at a rotation speed of 20 rpm in an environment with a gap of 0.5 mm and 23 °C was measured for a viscosity value. For an evaluation of storage stability, the viscosity value immediately after adjustment (i.e., storage for 0 days), namely viscosity after storage for 0 days, and the viscosity value after storage under the condition of 23 °C for 1 month (viscosity after storage at 23 ° C for 1 month) were compared. The ratio (viscosity after storage at 23 °C for 1 month / viscosity after storage for 0 days) was determined and used as the stable viscosity. The value of (viscosity after storage at 23 °C for 1 month / viscosity after storage for 0 days) is preferably 5 or less from the viewpoint of storage stability.

### Measurement of oxygen concentration

The first agent was prepared and collected immediately, and the dissolved oxygen content was measured. The dissolved oxygen concentration of the first agent was measured with a dissolved oxygen measuring device "portable dissolved oxygen system OM-71" manufactured by HORIBA, Ltd.

### [Table 1]

**[Table 1]**

| | Component | Used Materials | Example 1 | Example 2 | Example 3 | Example 4 | Example 5 | Example 6 | Example 7 | Example 8 |
|---|---|---|---|---|---|---|---|---|---|---|
| First Agent | (1) | Tetrahydrofurfuryl methacrylate | 100.0 | 100.0 | 100.0 | | 100.0 | 100.0 | | 100.0 |
| | (1) | Isooctyl acrylate | | | | 100.0 | | | 100.0 | |
| | (2) | Triethylborane-diethylenetriamine complex | 10.0 | 10.0 | 10.0 | 10.0 | 10.0 | 10.0 | 10.0 | 10.0 |
| | (4) | NBR | | | | | | 10.0 | | |
| | (4) | Polybutadiene | | | | | | | 5.0 | |
| | | Oxygen Concentration(ppm) | 5.0 | 1.0 | 0.1 | 1.0 | 1.0 | 1.0 | 1.0 | 1.0 |
| Second Agent | (1) | Tetrahydrofurfuryl methacrylate | 100.0 | 100.0 | 100.0 | 100.0 | 50.0 | 50.0 | 50.0 | 100.0 |
| | (1) | Isobornyl methacrylate | | | | | 50.0 | 50.0 | 50.0 | |
| | (3) | Acid phosphooxyethyl methacrylate | 5.0 | 5.0 | 5.0 | 5.0 | 5.0 | 5.0 | 5.0 | |
| | (4) | NBR | | | | | 5.0 | 5.0 | | |
| | (4) | Polybutadiene | | | | | | | 5.0 | |
| Mixing ratio(Mass ratio) = First Agent:Second Agent | | | 1:10 | 1 :10 | 1:10 | 1:10 | 1:10 | 1:10 | 1:10 | 1:10 |
| Result | Tensile Lap-Shear Strength (Adhered body:PP) | | Material fracture | Material fracture | Material fracture | Material fracture | Material fracture | Material fracture | Material fracture | Material fracture |
| | Tensile Lap-Shear Strength (Adhered body:: CFR-PP) | | 6.8MPa Aggregate fracture | 6.5MPa Aggregate fracture | 6.0MPa Aggregate fracture | 6.0MPa Aggregate fracture | 7.1 MPa Aggregate fracture | 7.0MPa Aggregate fracture | 5.0MPa Aggregate fracture | 5.9MPa Aggregate fracture |
| | Stability viscosity: Storage at 23 °C for 1 month/Storage for 0 days | | 3.1 | 2.1 | 1.5 | 2.9 | 2.1 | 1.5 | 1.3 | 2.0 |

| | | | | | | | | | | |
|---|---|---|---|---|---|---|---|---|---|---|
| Unit: parts by mass | | | | | | | | | | |

### <Comparative Examples 1 to 7>

An adhesive composition was prepared and evaluated in the same manner as in Example 1, except that the compositions shown in Table 2. The results are shown in Table 2.

### [Table 2]

**[Table 2]**

| | Component | Used Materials | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| First Agent | (1) | Tetrahydrofurfuryl methacrylate | 100.0 | | 100.0 | 100.0 | 100.0 | | 100.0 |
| | (1) | Isooctyl acrylate | | 100.0 | | | | 100.0 | |
| | (2) | Triethylborane-diethylenetriamine complex | 10.0 | 10.0 | 10.0 | 10.0 | 10.0 | 10.0 | 10.0 |
| | (4) | NBR | | | | | 10.0 | | |
| | (4) | Polybutadiene | | | | | | 5.0 | |
| | | Oxygen Concentration (ppm) | 15 | 10 | 15 | 13 | 10 | 12 | 11 |
| Second Agent | (1) | Tetrahydrofurfuryl methacrylate | 100.0 | 100.0 | | 50.0 | 50.0 | 50.0 | 100.0 |
| | (1) | Isobornyl methacrylate | | | 100.0 | 50.0 | 50.0 | 50.0 | |
| | (3) | Acid phosphooxyethyl methacrylate | 5.0 | 5.0 | 5.0 | 5.0 | 5.0 | 5.0 | |
| | (4) | NBR | | | | 5.0 | 5.0 | | |
| | (4) | Polybutadiene | | | | | | 5.0 | |
| Mixing ratio (Mass ratio) = First Agent: Second Agent | | | 1:10 | 1:10 | 1:10 | 1:10 | 1:10 | 1:10 | 1:10 |
| Result | Stability viscosity: Storage at 23 °C for 1 month/Storage for 0 days | | 6 | 7 | 6 | 6 | 50 | 10 | 6 |

| | | | | | | | | | |
|---|---|---|---|---|---|---|---|---|---|
| Unit: parts by mass | | | | | | | | | |

The adhesive compositions of Examples 1 to 9 have higher adhesiveness and storage stability with respect to polypropylene and polypropylene containing carbon fibers. On the other hand, that of the Comparative Examples, has lower storage stability, because the oxygen content of the first agent was larger.

### Industrial Applicability

The adhesive component of the embodiment of the present invention can be easily bond automobile parts, and electric parts, because it has higher adhesiveness and storage stability to a hardly adhere body such as polyolefin (such as polypropylene, and polyethylene).

## Claims

1. A two-part composition containing a first agent and a second agent:
the first agent comprising (1) (meth)acrylate and (2) organoboron compound, and having an oxygen content of 5 ppm or less, and
the second agent comprising (3) phosphate ester.

2. The composition according to Claim 1, wherein (3) phosphate ester is a phosphate ester represented by the general formula (A):
general formula (A) 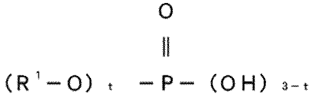 (In the formula, R¹ is a saturated or unsaturated hydrocarbon group having 1 to 30 carbon atoms, or CH₂=CR²C(O)O-(R³)ᵤgroup where R² represents a hydrogen or methyl group, R³ represents -C₂H₄-, -C₃H₆-, -CH₂CH(CH₃)-, -C₄H₈-, -C₆H₁₂-, or 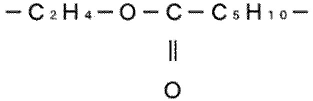 t represents an integer of 1 or 2. u represents an integer of 1 to 10.)

3. The composition according to Claim 1 or 2, wherein (3) phosphate ester is used in 0.5 to 20 parts by mass with respect to 100 parts by mass of (1) (meth)acrylate.

4. The composition according to any one of Claims 1 to 3, wherein (1) (meth)acrylate contains (1-1) (meth)acrylate having a cyclic ether skeleton.

5. The composition according to any one of Claims 1 to 4, wherein (1) (meth)acrylate contains (1-1) (meth)acrylate having a cyclic ether skeleton and (1-2) (meth)acrylate having an aliphatic hydrocarbon group.

6. The composition according to any one of Claims 1 to 5, wherein (2) organoboron compound is an alkylborane-amine complex.

7. The composition according to Claim 6, wherein the alkylborane-amine complex is one or more of the groups consisting of triethylborane-1,3-diaminopropane complex, triethylborane-diethylenetriamine complex, and tributylborane-3-methoxy-1-propylamine complex.

8. The composition according to any one of Claims 1 to 7, wherein (2) organoboron compound is used in 0.01 to 10 parts by mass with respect to 100 parts by mass of (1) (meth)acrylate.

9. The composition according to any one of Claims 1 to 8, wherein at least one of the first agent and the second agent further contains (4) elastomer component.

10. A curable resin composition containing the composition according to any one of Claims 1 to 9.

11. An adhesive composition containing the composition according to any one of Claims 1 to 9.

12. The adhesive composition according to Claim 11, which being used for adhering an adhered body comprising one or more of the groups consisting of polyolefin, cycloolefin, polystyrene, and fiber reinforced plastic.

13. A bonded body bonded by the adhesive composition according to Claim 11 or 12.
